# EUROPEAN PATENT APPLICATION

(11) **EP 4 597 181 A1**
(43) Date of publication of application: **06.08.2025**
(21) Application number: 24775829.5
(22) Date of filing: 13.06.2024
(51) Int. Cl.: G02B 6/04, G02B 6/06, G02B 6/44, G02B 1/10, C03B 37/028, C03B 37/15, C03B 37/018

(54) **HIGH-UNIFORMITY AND HIGH-TRANSMITTANCE FIBER OPTIC IMAGE INVERTER, AND MANUFACTURING METHOD THEREFOR AND USE THEREOF**

(30) Priority: 30.11.2023 CN 202311624354
(71) Applicant: China Building Materials Academy Co., Ltd., Beijing 100024 (CN); China National Building Material Group Co., Ltd., Beijing 100036 (CN)
(72) Inventor: HUANG, Yonggang, Beijing 100024 (CN); XING, Yuwen, Beijing 100024 (CN); JIAO, Peng, Beijing 100024 (CN); ZHANG, Xian, Beijing 100024 (CN); ZHANG, Jing, Beijing 100024 (CN); SONG, Puguang, Beijing 100024 (CN); DU, Yajie, Beijing 100024 (CN); ZHANG, Lei, Beijing 100024 (CN); CHU, Miao, Beijing 100024 (CN); JIANG, Dongyu, Beijing 100024 (CN)
(74) Representative: J A Kemp LLP
(86) International application number: PCT/CN2024/098874
(87) International publication number: WO 2025/112438

(57) **Abstract**

The present application relates to a fiber image inverter with high-uniformity and high-transmittance, including an input end portion, an output end portion, and an optical fiber portion arranged between the input end portion and the output end portion. A surface of the input end portion and/or the output end portion has a film whose thickness gradually decreases from a center to an edge. The thickness and position of the film satisfy: x=-2×10⁻⁷y⁶-8×10⁻⁹y⁵-1×10⁻⁴y⁴-2×10⁻⁶y³-0.0315y²-1×10⁻¹¹y+4.2165, wherein x is the absolute thickness of the film, and y is a distance from the center to the edge. A technical problem to be solved is to obtain the fiber image inverter with the high-uniformity and the high-transmittance by improving a drawing profile of the fiber image inverter and coating a homogenizing film at the same time.

## Description

### CROSS-REFERENCE TO RELATED APPLICATIONS

The present application claims priority to Chinese patent application No. 202311624354.9 filed on November 30, 2023 to the China Patent Office, and entitled "FIBER IMAGE INVERTER WITH HIGH-UNIFORMITY AND HIGH-TRANSMITTANCE, AND PREPARATION METHOD AND APPLICATION THEREOF", the entire content of which is incorporated herein by reference.

### TECHNICAL FIELD

The present application relates to an optical fiber image transmission element, in particular to a fiber image inverter with high-uniformity and high-transmittance, and a preparation method and application thereof.

### BACKGROUND

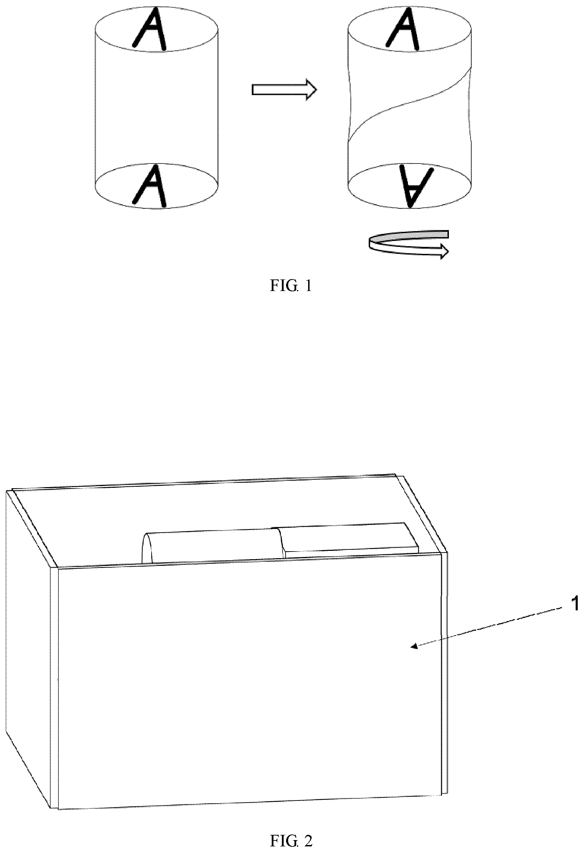

A low-light-level night vision technology is a high and new technology that studies physical processes such as mutual conversion, enhancement, processing, and display of photo-electronic image information and achieving methods thereof under conditions of night sky light or poor visibility, is an important part of a modern optoelectronic imaging technology, and is one of two major supporting technologies for military night vision equipment. Various low-light-level devices, instruments, and systems developed by using this high and new technology have very broad application prospects, and have played a tremendous role in many fields such as military, public security, astronomy, aerospace, navigation, biology, medicine, nuclear physics, satellite monitoring, and high-speed photography, especially in night operations, reconnaissance, command, fire control, artillery aiming, precision guidance, long-range early warning, photoelectric countermeasures, etc. in the military field. A low-light-level night vision device has the characteristics of small size, light weight, clear image, rich level, convenient operation, high cost performance, etc. The key to achieving miniaturization and lightweight of the low-light-level night vision device lies in an optical fiber image transmission element-an image inverter, which has an image inverting function. The fiber image inverter may invert an image by 180°, making the transmitted image an inverted image, as shown in FIG 1. The fiber image inverter has the characteristics of high resolution, clear transmission, small size, light weight, etc., is mainly used for replacing a relay lens system in the low-light-level night vision device, and is also widely used in apparatuses that require image inverting.

The problem of transmittance non-uniformity of the image inverter in the prior art is more serious, and a poor edge resolution leads to poor imaging clarity, which has a great relationship with a preparation process of the image inverter. The image inverter is obtained by melting and pressing tens of millions or even hundreds of millions of micron-level optical fibers followed by high-temperature torsional deformation (as shown in FIG 1). In a torsion process, only optical fibers at an axis are not torsionally stretched, and the rest of optical fibers are torsionally stretched and coiled at different helix angles by 180°. The farther away from the axis, the smaller the helix angle. The greater the curvature, the longer the coiling distance. The greater the degree of stretching, the greater the formed taper, and the weaker the light transmission effect, which forms a phenomenon of the transmittance high in a center and low at an edge. This non-uniform transmittance directly affects an imaging effect.

### SUMMARY OF THE INVENTION

In view of this, a main objective of the present application is to provide a fiber image inverter with high-uniformity and high-transmittance, and a preparation method and application thereof. A technical problem to be solved is to obtain the fiber image inverter with the high-uniformity and the high-transmittance by improving a drawing profile of the fiber image inverter and coating a homogenizing film at the same time.

The objective of the present application and a solution of the technical problem thereof are implemented by adopting the following technical scheme. A fiber image inverter with high-uniformity and high-transmittance proposed by the present application includes an input end portion, an output end portion, and an optical fiber portion arranged between the input end portion and the output end portion. A surface of the input end portion and/or the output end portion has a film whose thickness gradually decreases from a center to an edge. The thickness and position of the film satisfy: x=-2×10⁻⁷y⁶-8×10⁻⁹y⁵-1×10⁻⁴y⁴-2×10⁻⁶y³-0.0315y²-1×10⁻¹¹y+4.2165, wherein x is the absolute thickness of the film, and y is a distance from the center to the edge.

Further, in the aforementioned fiber image inverter with the high-uniformity and the high-transmittance, a value of x is greater than 0, and a value of y is in a range from 0 to 11.5.

Further, in the aforementioned fiber image inverter with the high-uniformity and the high-transmittance, the fiber image inverter is a biquadratic function type image inverter or a bicubic function type image inverter.

Further, in the aforementioned fiber image inverter with the high-uniformity and the high-transmittance, the film includes a homogenizing film layer and/or an anti-reflection film layer, and a center of the film is provided with a film layer center.

The objective of the present application and the solution of the technical problem thereof may further be implemented by adopting the following technical scheme. A method for preparing a fiber image inverter with high-uniformity and high-transmittance proposed by the present application includes the following steps:
preparing a torsional structure of the image inverter; and
preparing a homogenizing film on a surface of the image inverter.

Further, in the aforementioned method for preparing a fiber image inverter with the high-uniformity and the high-transmittance, preparing the torsional structure of the image inverter includes the following step:
preparing a biquadratic function type image inverter or a bicubic function type image inverter respectively according to an optical fiber track in a torsional region of the image inverter.

Further, in the aforementioned method for preparing a fiber image inverter with the high-uniformity and the high-transmittance, preparing the homogenizing film on the surface of the fiber image inverter includes the following step:
coating the surface of the fiber image inverter with the film whose thickness gradually decreases from a center to an edge.

Further, in the aforementioned method for preparing a fiber image inverter with the high-uniformity and the high-transmittance, the film includes a homogenizing film layer and/or an anti-reflection film layer, and a center of the film is provided with a film layer center.

Further, in the aforementioned method for preparing a fiber image inverter with the high-uniformity and the high-transmittance, a rotation speed for coating the film whose thickness gradually decreases from the center to the edge is in a range from 10rpm to 20rpm.

Further, in the aforementioned method for preparing a fiber image inverter with the high-uniformity and the high-transmittance, a pressure for coating the film whose thickness gradually decreases from the center to the edge is in a range from 1.0Pa to 2.0Pa.

Further, in the aforementioned method for preparing a fiber image inverter with the high-uniformity and the high-transmittance, a vacuum degree for coating the film whose thickness gradually decreases from the center to the edge is less than or equal to 3×10⁻⁴.

Further, in the aforementioned method for preparing a fiber image inverter with the high-uniformity and the high high-transmittance, a gas flow of argon is in a range from 15sccm to 30sccm during coating the film whose thickness gradually decreases from the center to the edge.

Further, in the aforementioned method for preparing a fiber image inverter with the high-uniformity and the high-transmittance, the coating the film whose thickness gradually decreases from the center to the edge is achieved by sputtering; and pre-sputtering is started with power ranging from 30W to 50W, formal sputtering is started by adjusting the power to a range from 60W to 80W after pre-sputtering ranging from 3 minutes to 5 minutes, and formal sputtering time is in a range from 0.5 minute to 3 minutes.

The objective of the present application and the solution of the technical problem thereof may further be implemented by adopting the following technical scheme. A low-light-level night vision device proposed by the present application includes the above fiber image inverter with the high-uniformity and the high-transmittance.

By virtue of the above technical schemes, the fiber image inverter with the high-uniformity and the high-transmittance, and the preparation method and application thereof have at least the following advantages.

In the present application, according to a design of non-uniform transmittance of the image inverter, the surface of the image inverter is coated with the layer of homogenizing film that may effectively relieve the non-uniform transmittance in an effective region, and the homogenizing film has a gradual change trend of the thickness gradually decreasing from the center to the edge. At the same time, according to a torsional structure curve and a change of the transmittance of the image inverter, a torsion mode of the image inverter is optimized, and a torsional structure curve of a bicubic function type is designed, which may greatly overcome a vignetting defect. According to the prepared image inverter, a resolution of the image inverter may be effectively improved.

In view of the problem of the nonuniform light transmittance of an emitting end face of the image inverter, the present application is designed from the torsional structure curve of the image inverter and a surface microstructure of the image inverter, which may greatly relieve non-uniformity of the transmittance, make emitting light of the image inverter uniform, and reduce a brightness difference between peripheral and central regions of the image inverter.

The image inverter prepared by the present application may reach the non-uniform transmittance in a range from 0.98% to 2.10% at a wavelength of 550nm. The uniformity of transmittance reaches a range from 97.9% to 99.02%. Central transmittance may reach a range from 39.87% to 41.08%.

The above description is only a summary of the technical schemes of the present application. In order to be able to understand technical means of the present application more clearly, and perform implementations in accordance with the content of the specification, the following is described in detail with preferred embodiments of the present application.

### BRIEF DESCRIPTION OF THE DRAWINGS

FIG 1 is a schematic diagram of torsion of an image inverter in the prior art;
FIG 2 is a schematic diagram of an overall structure of a mechanical rotary coating apparatus of the present application;
FIG 3 is a schematic structural diagram of a mechanical rotary coating apparatus without a protective shell of the present application;
FIG 4 is a perspective view of a partial section of a mechanical rotary coating apparatus of the present application;
FIG 4A is a schematic structural diagram of a rotary base of a mechanical rotary coating apparatus of the present application;
FIG 5 is a diagram of a volute mask of a mechanical rotary coating apparatus of the present application;
FIG 6 is a schematic diagram of a torsion curve of a biquadratic function and unfolding of the present application;
FIG 7 is a schematic diagram of a torsion curve of a bicubic function and unfolding of the present application;
FIG 8A is a schematic structural diagram of a biquadratic function type image inverter with a homogenizing film deposited at an output end of the present application;
FIG 8B is a schematic structural diagram of a bicubic function type image inverter with a homogenizing film deposited at an output end of the present application;
FIG 9A is a schematic structural diagram of a biquadratic function type image inverter with a homogenizing film deposited at an output end and an anti-reflection film deposited at an input end of the present application;
FIG 9B is a schematic structural diagram of a bicubic function type image inverter with a homogenizing film deposited at an output end and an anti-reflection film deposited at an input end of the present application;
FIG 10A is a schematic structural diagram of a biquadratic function type image inverter with a homogenizing film deposited at an input end of the present application;
FIG 10B is a schematic structural diagram of a bicubic function type image inverter with a homogenizing film deposited at an input end of the present application;
FIG 11A is a schematic structural diagram of a biquadratic function type image inverter with an anti-reflection film deposited at an input end and a homogenizing film deposited at an output end of the present application;
FIG 11B is a schematic structural diagram of a bicubic function type image inverter with an anti-reflection film deposited at an input end and a homogenizing film deposited at an output end of the present application;
FIG 12A is a schematic structural diagram of a biquadratic function type image inverter with a homogenizing film deposited at an output end and a homogenizing film deposited at an input end of the present application;
FIG 12B is a schematic structural diagram of a bicubic function type image inverter with a homogenizing film deposited at an output end and a homogenizing film deposited at an input end of the present application;
FIG 13A is a schematic structural diagram of a biquadratic function type image inverter with a homogenizing film deposited at an output end and a homogenizing film + an anti-reflection film deposited at an input end of the present application;
FIG 13B is a schematic structural diagram of a bicubic function type image inverter with a homogenizing film deposited at an output end and a homogenizing film + an anti-reflection film deposited at an input end of the present application;
FIG 14A is a schematic structural diagram of a biquadratic function type image inverter with a homogenizing film + an anti-reflection film deposited at an output end and a homogenizing film deposited at an input end of the present application;
FIG 14B is a schematic structural diagram of a bicubic function type image inverter with a homogenizing film + an anti-reflection film deposited at an output end and a homogenizing film deposited at an input end of the present application;
FIG 15A is a schematic structural diagram of a biquadratic function type image inverter with a homogenizing film + an anti-reflection film deposited at an output end and a homogenizing film + an anti-reflection film deposited at an input end of the present application;
FIG 15B is a schematic structural diagram of a bicubic function type image inverter with a homogenizing film + an anti-reflection film deposited at an output end and a homogenizing film + an anti-reflection film deposited at an input end of the present application;
FIG 16 is a diagram of transmittance test results before and after coating of Embodiment 1 of the present application;

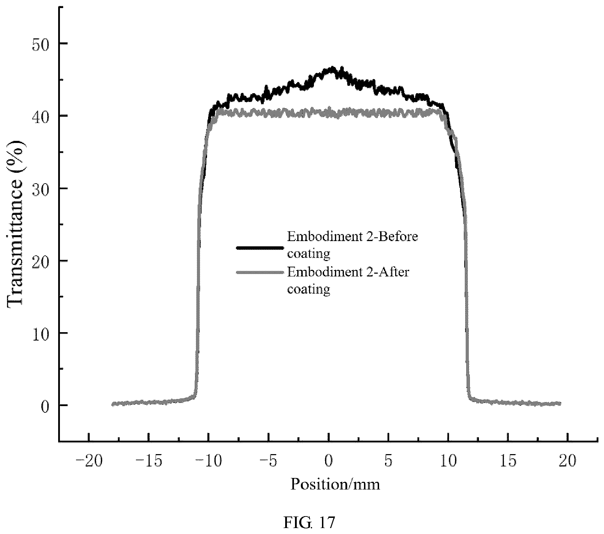

FIG 17 is a diagram of transmittance test results before and after coating of Embodiment 2 of the present application;

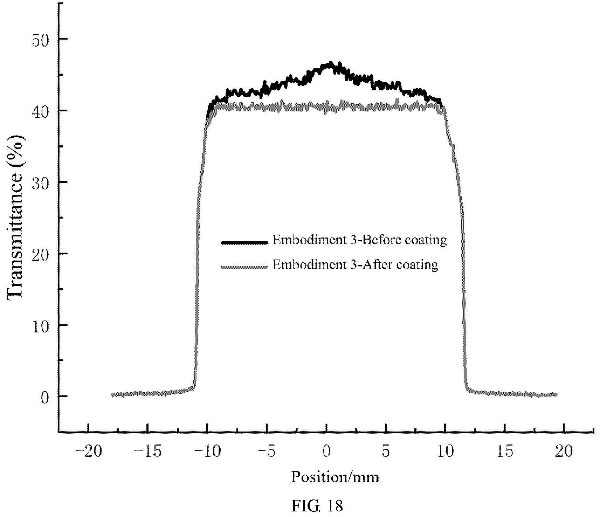

FIG 18 is a diagram of transmittance test results before and after coating of Embodiment 3 of the present application;

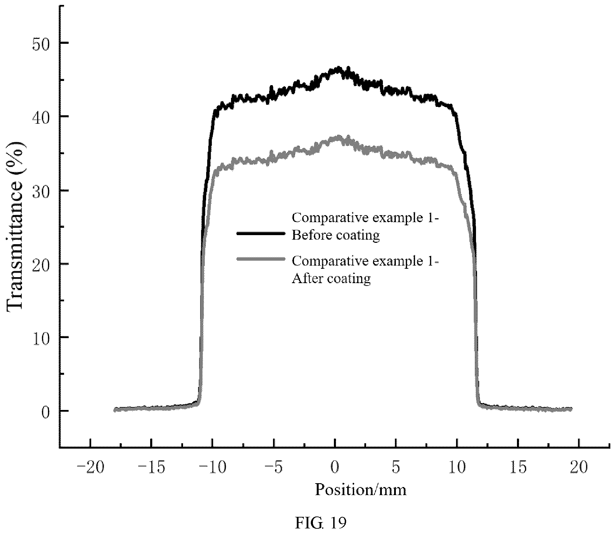

FIG 19 is a diagram of transmittance test results before and after coating of Comparative example 1 of the present application;
wherein: 1-protective shell; 2-motor; 3-pinion; 4-large gear; 5-rotary base; 6-mask; 7-sample chamber; 8-platform; 91-output end portion, 92-output end portion, 10-input end portion, 20-input end portion, 11-homogenizing film, 21-homogenizing film, 12-anti-reflection film, 22-anti-reflection film, 13-film layer center, 23-film layer center, 33-film layer center, 43-film layer center, 14-biquadratic function type image inverter, and 15-bicubic function type image inverter.

### DETAILED DESCRIPTION

In order to further elaborate technical means and efficacy adopted by the present application to achieve an intended application objective, a fiber image inverter with high-uniformity and high-transmittance, and a preparation method and application thereof proposed in accordance with the present application, and specific implementations, characteristics and efficacy thereof are described in detail as follows in conjunction with accompanying drawings and better embodiments. In the following explanation, different "one embodiment" or "embodiment" do not necessarily refer to the same embodiment. In addition, specific characteristics or features in one or more embodiments may be combined in any suitable form.

Unless otherwise defined, all technical and scientific terms used herein have the same meanings as generally understood by those skilled in the art of the present application. The terms used herein are for the purpose of describing specific embodiments only and are not intended to limit the present application. Terms "include" and "have" and any variation thereof in the specification and claims of the present application and in the description of the above accompanying drawings are intended to cover non-exclusive inclusion.

In the description of the embodiments of the present application, technical terms "first" and "second" are only used for distinguishing different objects, and cannot be construed as indicating or implying relative importance or implicitly specifying a quantity, specific order or primary and secondary relationship of indicated technical features. In the description of the embodiments of the present application, "a plurality of" means two or more, unless otherwise expressly and specifically limited.

A reference to "embodiment" herein means that a particular characteristic, structure or feature described in conjunction with an embodiment may be contained in at least one embodiment of the present application. The presence of the phrase in various places in the specification does not necessarily refer to the same embodiment, nor is it an independent or alternative embodiment that is mutually exclusive with other embodiments. It is understood explicitly and implicitly by those skilled in the art that the embodiments described herein may be combined with other embodiments.

In the description of the embodiments of the present application, a term "and/or" only describes an association relationship of associated objects, which means that there may be three kinds of relationships, for example, A and/or B may mean three kinds of situations: A alone, A and B at the same time, and B alone. In addition, a character "/" herein generally indicates that front and back associated objects are in an "or" relationship.

In the description of the embodiments of the present application, a term "a plurality of" refers to more than two (including two), in the same way, "a plurality of groups" refers to more than two groups (including two groups), and "a plurality of pieces" refers to more than two pieces (including two pieces).

In the description of the embodiments of the present application, orientations or position relationships indicated by technical terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are orientations or position relationships shown based on the accompanying drawings, and are used only for convenient description of the embodiments of the present application and brevity of description, rather than indicating or implying that a mentioned apparatus or element must have a particular orientation or must be constructed and operated in a particular orientation. Therefore, such terms cannot be construed as a limitation of the present application.

In the description of the embodiments of the present application, unless otherwise expressly specified and limited, technical terms "mounted" "connected" "connection" "fixed", etc. are to be understood in a broad sense, for example, as a fixed connection, as a detachable connection, or as an integral part; also as a mechanical connection, or as an electrical connection; and as a direct connection, as an indirect connection through an intermediate medium, as a communication within two elements or as an interactive relationship between two elements. For those of ordinarily skill in the art, the specific meanings of the above terms in the embodiments of the present application may be understood according to specific circumstances.

### 1. Design of a torsional structure curve of an image inverter

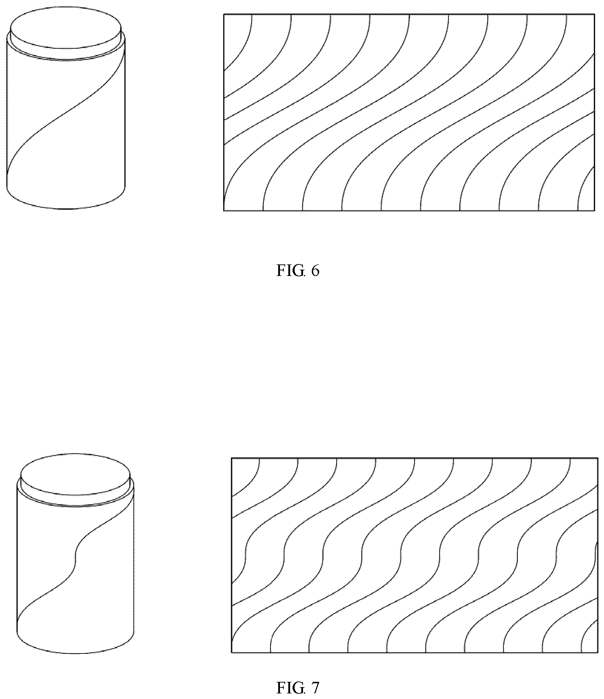

During a torsion process of the image inverter, a deformation degree of optical fibers in an edge region is different from that of optical fibers in a central region, resulting in a difference in light transmission abilities. Changing a torsion mode of the image inverter will produce different light transmission effects. According to thermodynamic and material mechanical performances of the image inverter during the torsion process (a change of an optical fiber track will affect a light transmission performance during a heating and stretching process of the optical fibers), the optical fiber track in a torsional region of the image inverter and light transmission uniformity thereof are optimized. Structural torsion curves with biquadratic function and bicubic function type distributions in a taper transformation region are designed, and image inverters corresponding to the two functions are called a biquadratic function type image inverter and a bicubic function type image inverter, as shown in FIG 6 and FIG 7. As may be seen from FIG 6 and FIG 7, the optical fiber curve of the bicubic function has a part of buffer compared with the curve of the biquadratic function type image inverter, which is conducive to optical signal transmission. According to a theory and transmittance test results, non-uniform transmittance of the bicubic function distribution is the lowest and may reach 4.13%, which effectively alleviates a vignetting defect and achieves the image inverter with high-transmittance.

"Center" refers to an exact center position of the image inverter. "Edge" refers to an edge position of an effective area of the image inverter, i.e., optical fibers on an outermost layer of the image inverter.

Biquadratic function type image inverter:
an image inverter blank is fixed on a torsion rod by stretching a fixture, and then a torsion furnace is controlled by a mechanical operation panel to make a center of the image inverter blank coaxial with a center of a torsion inner furnace, so that preparation work is completed. First, an outer furnace is heated to a preheating temperature (about in a range from 500°C to 550°C, a temperature difference between the inner and outer furnaces is too large to draw the image inverter if the preheating temperature is below 500°C, and there are too many defects in the image inverter if the preheating temperature is above 550°C). After stabilizing the temperature of the outer furnace for 15 minutes to 20 minutes (the purpose is full preheating), a heating ring (the function is to heat a middle part of the image inverter blank to a softening temperature) with an inner diameter of 40mm and a width of 2mm is used for heating up the inner furnace of the torsion furnace to a temperature of a softening point of the image inverter (about in a range from 780°C to 830°C, it cannot reach the softening temperature and torsion cannot be performed if the temperature is below 780°C, and the viscosity of the image inverter blank is too small to twist out the regularly shaped image inverter if the temperature is above 830°C). Through a servo motor and a torsional force sensor, two torsional forces (in a range from 10N to 15N) with constant values but opposite directions are applied to two ends of the image inverter. The central part of the image inverter blank in a heating region of the inner furnace is gradually softened, and the torsional forces are slowly applied to the two ends until a relative rotation is 180°. Heating of the inner furnace is stopped. An annealing procedure of the outer furnace is started. Finally the image inverter blank is taken out after it is lowered to a room temperature. At this time, the temperature difference between the inner and outer furnaces is only 280°C. A cone change trend of the stretched image inverter is a nonlinear change. A deformation region of the image inverter presents a parabolic shape of a biquadratic function, and a corresponding equation type is *y=ax²,* wherein a is greater than or equal to 0.06, and if it is less than 0.06, the image inverter cannot be formed by torsion. Taking the image inverter blank with a height of 30mm and a diameter of 26mm as an example, when the torsional force is controlled at 14N, the biquadratic function type image inverter may be achieved. At this time, a is 0.084, and a corresponding equation is y=0.084x².

Starting the annealing procedure of the outer furnace includes: turning off a heating program on the mechanical control panel, wherein a cooling rate is in a range from 5°C/min to 10°C/min. If a cooling procedure is not set, relying on natural cooling, the cooling rate is more than 10°C/min, which has an adverse effect on the life of the furnace.

### Bicubic function type image inverter:

A torsion method is the same as the torsion method of the biquadratic function type image inverter. A difference is that a heating ring of the bicubic function type image inverter is movable, a position of the heating ring is at a quarter of an image inverter blank at first, the heating ring is moved to three quarters of the image inverter blank after torsion by 90°, and the torsion is continued by 90°. The image inverter prepared by this method will show a deformation region of the image inverter in a shape of double parabolas of a cubic function. A corresponding equation type is *y*=*ax*³, and a is greater than or equal to 0.0038. If a is less than 0.0038, the image inverter cannot be formed by torsion. Taking the image inverter blank with a height of 30mm and a diameter of 26mm as an example, when a torsional force is controlled at 14N, the biquadratic function type image inverter may be achieved. At this time, a is 0.0048, and a corresponding equation is y=0.0048x³.

### 2. Design and preparation of a homogenizing film on a surface of the image inverter

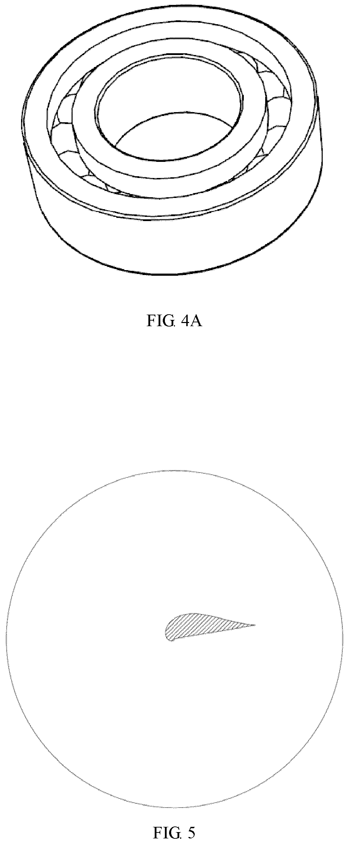

The use of a conventional method (no rotary coating apparatus or mask) for coating the surface of the image inverter with a film with a consistent thickness can only change overall transmittance of the image inverter, but cannot solve the problem of the difference in brightness between the edge and the central regions of the image inverter, and cannot achieve an effect of highly uniform transmittance, so combined with the feature of the non-uniform transmittance of the image inverter (i.e., high-transmittance in the central region and low transmittance in the edge region), a volute mask that can achieve the film whose thickness gradually decreases from a center to an edge is designed. The volute mask is shown in FIG 5. A shadow part is a hollow part. The shape is designed according to the non-uniform transmittance of the image inverter. Firstly, a transmittance distribution of the image inverter is obtained by using a transmittance tester (i.e., an apparatus for detecting visible light transmittance and uniformity of an optical fiber image transmission element involved in Patent Application No. CN 111442908A). Then a functional relationship between the transmittance of the image inverter and a position of an effective region is obtained by fitting according to obtained data. Then a film thickness and position of a film layer needing coating are calculated by this function. This function is: x=-2×10⁻⁷y⁶-8×10⁻⁹y⁵-1×10⁻⁴y⁴-2×10⁻⁶y³-0.0315y²-1×10⁻¹¹y+4.2165, wherein x is an absolute thickness of the film layer, and y is a distance from a center to an edge (a value of x is greater than 0, and a value of y is in a range from 0 to 11.5). Finally the shape of the volute mask is obtained according to formulae *θ*(*x*)*=θ*₀*d*(*x*)/*d*₀ and ρ=(1-d/H)r. Wherein *θ*(*x*) is an angle at which the volute mask is exposed to a vapor stream, *d*₀ is a thickness at the center of the film layer, θ0 is an opening angle at the center of the film layer, a distance between an evaporation source and a lower surface of a coated substrate is H, a distance between a shield and the lower surface of the substrate is d, a polar diameter from a center of the shield to a reference point of an opening is ρ, and a maximum radius of the glass substrate that can be reached by the evaporation source is r. As shown in FIG. 5, an opening size of the shape of the volute mask is in a gradually decreasing trend from the center to the edge. In combination with the rotary coating apparatus, the target film layer can be obtained by exposing a middle region for a long time and an edge region for a short time during a coating process.

By combining the mechanical rotary coating apparatus and the volute mask, the film whose thickness gradually decreases from a center to an edge can be made by coating, and the image inverter with the non-uniform transmittance is matched to achieve an image inverter with highly uniform transmittance finally. In actual use, the homogenizing film may be made by coating at input and output ends of the image inverter respectively or at the same time. In addition, the homogenizing film may also be matched with an anti-reflection film to achieve an ultra-high light transmission effect while achieving high homogenization of transmittance. The homogenizing film may reduce the vignetting defect, the anti-reflection film may increase the overall transmittance of the image inverter, and the combination of the two may achieve the low vignetting defects in the effective area with high-transmittance.

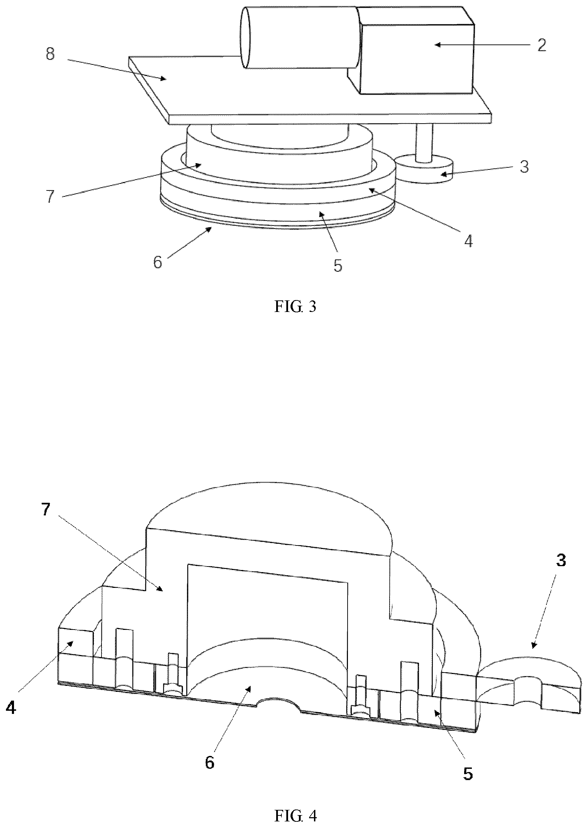

The above mechanical rotary coating apparatus is shown in FIG 2 to FIG 5 and includes a protective shell 1, a motor 2, a pinion 3, a large gear 4, a rotary base 5, a mask 6, a sample chamber 7, a platform 8, and a sample 9 fixed through a screw. The protective shell 1 is fixedly connected with the platform 8, so that the whole apparatus is in a regular shape (it is a cuboid of 173mm in length, 136mm in width, and 115mm in height), and is conveniently placed in a cavity. The platform 8 is a rectangular metal plate with a thickness of 3mm, so that a size can be reduced as much as possible under the premise of ensuring that components such as the motor and the sample chamber can be carried. As shown in FIG 6A, the rotary base 5 is of a bearing structure made up of two concentric rings, and includes a non-rotary internal structure and a rotary external structure that are connected by a steel ball, its internal structure is fixed to the sample chamber 7, an upper end face of its external structure is fixed to the large gear 4, and a lower end face of its external structure is fixed to the mask 6, so that the mask can rotate, and the sample chamber does not rotate. Specifically, the rotary base 5 is a high-precision bearing, and a clearance inside the bearing is very small, a distance between the two is filled with the steel ball, the stability is very high, and it will not shake, so that high coaxiality is ensured. Because the rotary base 5 is of a three-dimensional structure and is located between the sample chamber 7 and the mask 6, according to a direction of placing the mechanical rotary coating apparatus with high stability and high coaxiality on a coating device, the sample chamber 7 is fixed to an upper part of the inside of the rotary base 5, and the mask 6 is fixed below the outside of the rotary base 5. The sample 9 is a fiber image inverter, and its size and performance are not required, and fiber image inverters of different sizes may be put in by changing a size of the sample chamber. The rotary base 5 is fixed together with the mask 6, the motor drives the rotary base 5 to rotate, and the sample chamber 7 remains stationary, so that an effect of a rotation of the mask 6 can be achieved. By combining the mechanical rotary coating apparatus and the volute mask 6, the film whose thickness gradually decreases from the center to the edge can be made by coating, and the fiber image inverter with the non-uniform transmittance is matched to achieve the fiber image inverter with high-uniformity finally.

The sample 9 is placed in the sample chamber 7, the sample chamber 7 is 4mm higher than the sample, and a rubber pad is put in to avoid damaging an end face of the sample 9 when the mechanical rotary coating apparatus is disassembled upside down. Specifically, the rubber pad is positioned between a large end face of the fiber image inverter and the sample chamber 7, so that the arrangement may avoid direct contact between the large end face of the fiber image inverter and the sample chamber 7. In addition, a material of the sample chamber 7 is polytetrafluoroethylene, and the reason why the polytetrafluoroethylene is selected is first because its weight is light, and the overall weight of the apparatus can be reduced; and the second reason is that it can withstand a higher temperature than ordinary plastics. An upper end face of the sample chamber 7 is fixed to the platform 8 through a screw, and a lower end face of the sample chamber is fixed to the upper end face of the internal structure of the rotary base 5 through a screw. The sample chamber 7 is a cylindrical groove with a diameter of 48mm and a depth of 45mm. One end of the platform 8 is fixed to the motor 2 through a screw, so that a coating effect is ensured while the rotation of the mask is not disturbed.

The pinion 3 with a small diameter is mounted at a tail end of a shaft of the motor 2, and the motor 2 rotates to drive the pinion 3 to rotate, so that with this arrangement, the coating effect is ensured while the rotation of the mask is not disturbed.

The pinion 3 is meshed with the large-diameter and hollow large gear 4, and the pinion 3 rotates to drive the large gear 4 to rotate. During a specific implementation, the diameter of the large gear 4 needs to be equal to a diameter of the outside of the bearing. Considering that the sample chamber 7 needs to be placed in the middle of the large gear 4, the large gear 4 is arranged to be hollow. The diameter of the large gear 4 is consistent with the size of the rotary base, a rotation speed ratio of the pinion 3 and the large gear 4 is 5: 1, and the uniformity of film formation is good at this moment. According to the rotation speed ratio, the pinion 3 with an appropriate diameter is selected. Too fast or too slow rotation may easily lead to poor uniformity of film formation and stains on the surface of the film layer. The rotation speed ratio between the large gear and the pinion is designed to control the rotation speed of the bottom mask and improve the uniformity of the coating thickness. Combined with the position of the pinion and the rotation speed ratio, the diameter of the pinion 3 is designed to be 3cm after comprehensive consideration. At the same time, the mechanical rotary coating apparatus can use the large gear and the pinion for transmission in a limited space, so that transmission efficiency is higher.

The motor 2 drives the pinion 3 to rotate, the pinion 3 drives the large gear 4 to rotate, the large gear 4 drives the outside of the bearing to rotate, the outside of the bearing drives the mask to rotate, so that the sample does not rotate, and the mask rotates.

The large gear 4 is fixed to an upper end of the outside of the rotary base 5 through a screw, the large gear 4 rotates to drive the rotary base 5 to rotate, and a distance of 1mm is left between the large gear 4 and the sample chamber 7, so that the large gear 4 will not be affected by the sample chamber 7 when rotating.

A lower end face of the outside of the rotary base 5 is fixed to the mask 6 through a screw, the outside of the rotary base 5 drives the mask 6 to rotate, the size of the mask 6 is equal to the size of the outside of the rotary base 5, and a gap between the two is 2mm, so that the coating effect is ensured while the rotation of the mask 6 is not disturbed. Specifically, the mask 6 is a volute copper plate hollowed out in the middle, its thickness is 0.5mm, and its diameter is 120mm. The hollow middle part of the volute copper plate has a large opening, and the edge has a small opening, that is, middle exposure time is long and edge exposure time is short during coating, and the gradual-change film with a thick middle film layer and a thin edge film layer can be achieved. On the premise of ensuring that the mask is not deformed, the thinner the copper plate, the better, so that a sputtering material can better adhere to the sample. After testing, it is found that a mask with a thickness of less than 0.5mm is prone to deformation. Considering that the mask 6 is fixed to the rotary base through the screw, the diameter of the mask 6 is the same as an outer size of the rotary base to facilitate fixation.

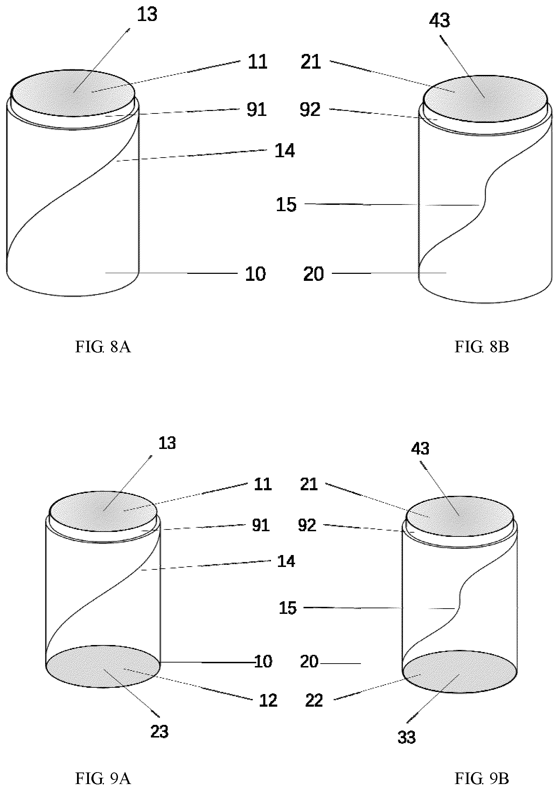

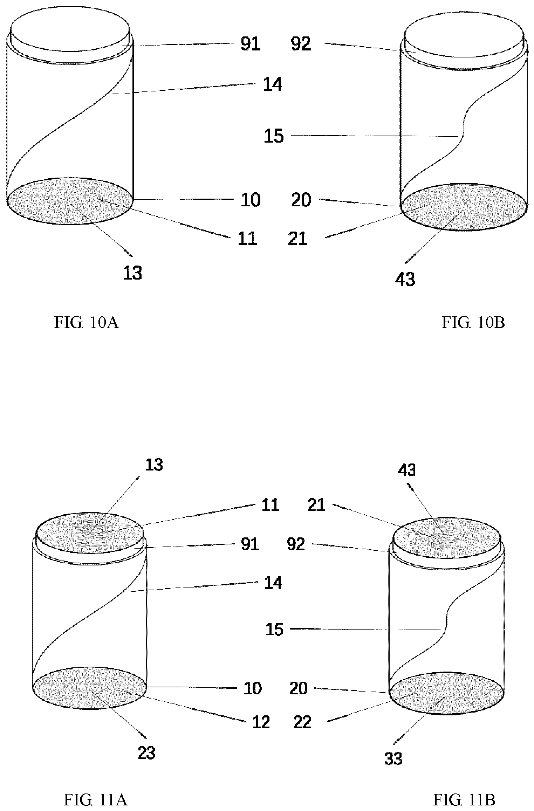

The coating the above fiber image inverter with the film whose thickness gradually decreases from the center to the edge includes the following steps.
1) The assembled mechanical rotary coating apparatus is put into the cavity of a magnetron sputtering coating machine. The cavity has good sealing property, and can be used for holding the sample or apparatus to be coated. In addition, if the mask is mounted first, the sample cannot be mounted, so if the apparatus needs to be used, the sample is mounted first, and then the mask is mounted.
2) A click power supply is turned on, and a rotation speed of the mechanical rotary coating apparatus is adjusted. Because a rotation speed of the motor of the mechanical rotary coating apparatus is adjustable, the rotation speed of the motor may be adjusted to a range from 10 rpm to 20 rpm by turning a button.
3) The cavity is closed, and coating is started. The closing the cavity and starting coating specifically includes the following steps.
   a After closing the cavity of the coating device, a mechanical pump is first turned on for pre-vacuumizing. After a vacuum degree is less than or equal to 10Pa, the mechanical pump is turned off, a solenoid valve is opened, and a molecular pump is turned on.
   b When the vacuum degree is less than or equal to 3×10⁻⁴, a gas flow meter is turned on, gas flows of argon and oxygen are adjusted to a range from 15sccm to 30sccm, and then a pressure in the cavity is adjusted to a range from 1.0Pa to 2.0Pa through a G valve. The vacuum degree less than or equal to 3×10⁻⁴ can satisfy coating needs. The lower the vacuum degree, the fewer impurities in the cavity. The lower the pressure, i.e., a working pressure, in the cavity, the higher the quality of the coated film layer, but a speed will be small, so 1.0Pa to 2.0Pa is selected as the working pressure.
   c A sputtering power switch is turned on. Pre-sputtering is started by adjusting power to a range from 30W to 50W. A baffle valve is opened after pre-sputtering ranging from 3 minutes to 5 minutes. Formal sputtering is started by adjusting the power to a range from 60W to 80W. Formal sputtering time is in a range from 0.5 minute to 3 minutes. The function of pre-sputtering is first to preheat the machine, and it is not suitable to use high power when the machine is turned on. The function of pre-sputtering is secondly to sputter off impurities on a surface of a target.
   d After the sputtering is completed, the baffle valve is closed, the power switch is turned off, a knob of the gas flow meter is turned to 0, the solenoid valve is closed, the molecular pump is turned off, and a valve connecting the air is opened to balance internal and external atmospheric pressures of the cavity.
   e The cavity of the coating device is opened, the mechanical rotary coating apparatus is taken out, coating ends, and the fiber image inverter with high-uniformity and high-transmittance is obtained, as shown in FIG 8A, FIG 8B, FIG 9A, FIG. 9B, FIG 10A, FIG 10B, FIG 11A, FIG 11B, FIG 12A, and FIG 12B. The fiber image inverter may be used in an electric low-light-level night vision device. There are two kinds of fiber image inverters, which are the biquadratic function type image inverter and the bicubic function type image inverter respectively. As may be seen from FIG 8A, FIG. 8B, FIG 9A, FIG 9B, FIG 10A, FIG. 10B, FIG 11A, FIG 11B, FIG 12A, and FIG 12B, input and output end faces of the two different function types of image inverters may be coated with homogenizing film layers, and even two ends may be coated with homogenizing film layers simultaneously. There are 10 kinds of coating modes in total. Specifically, as shown in FIG. 8A, FIG 9A, FIG 10A, FIG 11A, and FIG 12A, the biquadratic function type image inverter 14 includes an input end portion 10, an output end portion 91, and an optical fiber portion arranged between the input end portion 10 and the output end portion 91. A surface of the input end portion 10 and/or the output end portion 91 has a film whose thickness gradually decreases from a center to an edge. The thickness and position of the film satisfy: x=-2×10⁻⁷y⁶-8×10⁻⁹y⁵-1×10⁻⁴y⁴-2×10⁻⁶y³-0.0315y²-1×10⁻¹¹y+4.2165, wherein x is the absolute thickness of the film, and y is a distance from the center to the edge. The film includes homogenizing film layers 11 and 21, and/or anti-reflection film layers 12 and 22. A center of the homogenizing film layer 11 is provided with a film layer center 13. A center of the homogenizing film layer 21 is provided with a film layer center 43. A center of the anti-reflection film layer 12 is provided with a film layer center 23. A center of the anti-reflection film layer 22 is provided with a film layer center 33. As shown in FIG 8B, FIG 9B, FIG 10B, FIG 11B, and FIG 12B, the bicubic function type image inverter 15 includes an input end portion 20, an output end portion 92, and an optical fiber portion arranged between the input end portion 20 and the output end portion 92. A surface of the input end portion 20 and/or the output end portion 92 has a film whose thickness gradually decreases from a center to an edge. The thickness and position of the film satisfy: x=-2×10⁻⁷y⁶-8×10⁻⁹y⁵-1×10⁻⁴y⁴-2×10⁻⁶y³-0.0315y²-1×10⁻¹¹y+4.2165, wherein x is the absolute thickness of the film, and y is a distance from the center to the edge. The film includes homogenizing film layers 11 and 21, and/or anti-reflection film layers 12 and 22. A center of the homogenizing film layer 11 is provided with a film layer center 13. A center of the homogenizing film layer 21 is provided with a film layer center 43. A center of the anti-reflection film layer 12 is provided with a film layer center 23. A center of the anti-reflection film layer 22 is provided with a film layer center 33.

In summary, by combining the mechanical rotary coating apparatus and the volute mask, the film whose thickness gradually decreases from the center to the edge can be made by coating, and the image inverter with the non-uniform transmittance is matched to achieve an image inverter with highly uniform transmittance finally. In addition, the homogenizing films may also be matched to achieve an ultra-high light transmission effect while achieving high homogenization of transmittance. The homogenizing films may reduce the vignetting defect, the anti-reflection films may increase the overall transmittance of the image inverter, and the combination of the two may achieve the low vignetting defects in the effective area with high-transmittance.

The above "high-uniformity and high-transmittance" refers to the uniformity of the transmittance of the image inverter in a range from97.9% to 99.02% and central transmittance in a range from 39.87% to 41.08% at a wavelength of 550nm.

The present application is described in detail below in conjunction with specific embodiments.

"Center" mentioned below refers to an exact center position of the image inverter. "Edge" refers to an edge position of an effective area of the image inverter.

### Embodiment 1:

the embodiment provides a biquadratic function type image inverter, and its fabrication specifically includes the following steps.

S1, a glass rod with a high refractive index and a glass tube with a low refractive index are combined together and then drawn (at a temperature of 1850°C) into a monofilament (with a diameter of 3mm) by using a rod-tube combination method. The drawn monofilament and a light absorbing filament (with a diameter of 3mm) used for absorbing stray light are arranged into a hexagonal shape and then drawn (at a temperature of 1845°C) into a primary multifilament (with a diameter of 1.3mm). The primary multifilament is arranged again into a hexagonal shape and then drawn (at a temperature of 1450°C) into a secondary multifilament (with a diameter of 2mm). The secondary multifilament is placed into a melting pressing grinding tool and subjected to high temperature and high pressure (a temperature of 650°C, and a pressure of 15 tons) to prepare a blank plate (with a height of 40mm and a diameter of 26mm). The refractive index of the glass rod is 1.78 at a wavelength of 550nm. Its composition, by weight, is: 54.12% SiO₂, 14.84% K₂CO₃, 11.10% Na₂CO₃, 5.99% Al(OH)₃, 10.16% H₂BO₃, 2.88% CaCO₃, 0.23% BaCO₃, 0.07% CeO₂, 0.46% MgCO₃, 0.01% NiO, 0.05% Nb₂O₅, 0.01% Y₂O₃, and 0.08% La₂O₃. The refractive index of the glass tube is 1.49 at the wavelength of 550nm. Its composition, by weight, is: 35.25% SiO₂, 0.13% KNO₃, 0.10% Na₂CO₃, 0.84% Al(OH)₃, 24.23% H₂BO₃, 10.26% CaCO₃, 25.50% BaCO₃, 0.21% MgCO₃, 1.68% La₂O₃, 0.06% Sb₂O₃, and 1.74% TiO₂. The composition of the light absorbing filament, by weight, is: 55.84% SiO₂, 11.27% K₂CO₃, 6.11% Na₂CO₃, 9.37% Al(OH)₃, 8.56% H₂BO₃, 2.67% CaCO₃, 0.03% BaCO₃, 0.19% CeO₂, 0.40% MgCO₃, 0.02% Fe₂O₃, 0.87% NiO, 2.87% MnO₂, 0.42% CoO, 0.01% La₂O₃, and 1.37% V₂O₅.

S2, the blank plate is fixed on a torsion rod by stretching a fixture, and then a torsion furnace is controlled by a mechanical operation panel to make a center of the blank plate coaxial with a center of a torsion inner furnace, so that preparation work is completed. First, an outer furnace is heated to a preheating temperature (about 550°C). After stabilizing the temperature of the outer furnace for 15 minutes (the purpose is full preheating, 20 minutes is also acceptable), a heating ring (the function is to heat a middle part of the blank plate to a softening temperature) with an inner diameter of 40mm and a width of 2mm is used for starting heating up the inner furnace of the torsion furnace at 10°C/min to a temperature of a softening point of the blank plate (about 820°C). Through a servo motor and a torsional force sensor, two torsional forces (150N) with constant values but opposite directions are applied to two ends of the blank plate. The central part of the blank plate in a heating region of the inner furnace is gradually softened, and the torsional forces are applied to the two ends until a relative rotation is 180°. Heating of the inner furnace is stopped. An annealing procedure of the outer furnace is started (cooling at a speed of 10°C/min). Finally, the image inverter blank is taken out after it is lowered to a room temperature. At this time, a temperature difference between the inner and outer furnaces is only 280°C. A cone change trend of the torsional image inverter is a nonlinear change. A deformation region of the image inverter presents a parabolic shape of a biquadratic function. Taking the image inverter blank with a height of 26mm and a diameter of 22mm as an example, when a torsional force is controlled at 14N, the biquadratic function type image inverter may be achieved. A corresponding equation type is y=0.087x².

S3, the image inverter blank is polished for 2h, a roughness reaches 20nm, and then performance detection is performed to ensure that the transmittance, resolution, and internal defects (such as flaws, chicken wires, and grids) of the image inverter satisfy the national standard (GJB9792-2020 Specification for Optical Fiber Image Transmission Coupling Elements).

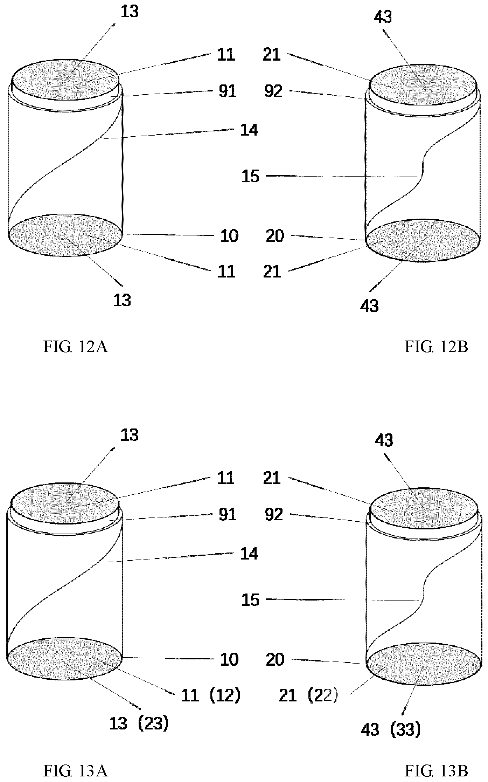

S4, firstly, a transmittance distribution of an output end of the biquadratic function type image inverter is tested by using a transmittance tester (i.e., an apparatus for detecting visible light transmittance and uniformity of an optical fiber image transmission element involved in Patent Application No. CN 111442908A). Then after analyzing obtained data, obtained non-uniform transmittance is 7.23%, and central transmittance is 45%. A gradual-change metallic chromium film with a center thickness of 6nm and an edge thickness of 1nm is then made through coating by using a rotary coating apparatus, the non-uniform transmittance is reduced to 2.1%, the central transmittance is 39.87%, and a test is shown in FIG. 13.

Specifically, the assembled rotary coating apparatus is put into a cavity of a magnetron sputtering coating machine. A click power supply is turned on, and a rotation speed of the rotary coating apparatus is adjusted to 10rpm. The cavity is closed, coating is started, and a distance between a mask and the fiber image inverter is 1mm.

The closing the cavity and starting coating specifically includes the following steps. a After closing the cavity of the coating device, a mechanical pump is first turned on for pre-vacuumizing. After a vacuum degree reaches 10Pa, the mechanical pump is turned off, a solenoid valve is opened, and a molecular pump is turned on. b When the vacuum degree reaches 2×10⁻⁴, a gas flow meter is turned on, a gas flow of argon is adjusted to 25sccm, and then a pressure in the cavity is adjusted to 0.8Pa through a G valve. c A sputtering power switch is turned on. Pre-sputtering is started by adjusting power to 50W. A baffle valve is opened after pre-sputtering for 5 minutes. Formal sputtering is started by adjusting the power to 60W. Formal sputtering time is 50s. d After the sputtering is completed, the baffle valve is closed, the power switch is turned off, a knob of the gas flow meter is turned to 0, the solenoid valve is closed, the molecular pump is turned off, and a valve connecting the air is opened to balance internal and external atmospheric pressures of the cavity. e The cavity of the coating device is opened, the rotary coating apparatus is taken out, coating ends, and the image inverter with high-uniformity and high-transmittance is obtained. The fiber image inverter may be used in an electric low-light-level night vision device.

As may be seen from FIG 13, the thickness of the chromium film decreases from the center to the edge. The central transmittance of the image inverter decreases from 45% to 39.87%, and vignetting defects decrease from 7.23% to 2.1%, which proves that the scheme may effectively reduce the vignetting defects.

### Embodiment 2:

the embodiment provides a bicubic function type image inverter, and its fabrication specifically includes the following steps.

S1, an implementation is the same as in Embodiment 1.

S2, a torsion method is the same as that of the biquadratic function type image inverter. A difference is that a heating ring of the bicubic function type image inverter is movable, a position of the heating ring is at a quarter of an image inverter blank at first, the heating ring is moved to three quarters of the image inverter blank after torsion by 90°, and the torsion is continued by 90°. During a stretching process, a center part of the image inverter blank can keep a straight region of 1mm, after which a torsional force of 14N continues to be applied. The image inverter prepared by this method will show a deformation region of the image inverter in a shape of double parabolas of a cubic function. Taking the image inverter blank with a height of 26mm and a diameter of 22mm as an example, when the torsional forces is controlled at 14N, the bicubic function type image inverter may be achieved by using the above method. A corresponding equation type is y=0.005x³.

S3, an implementation is the same as in Embodiment 1.

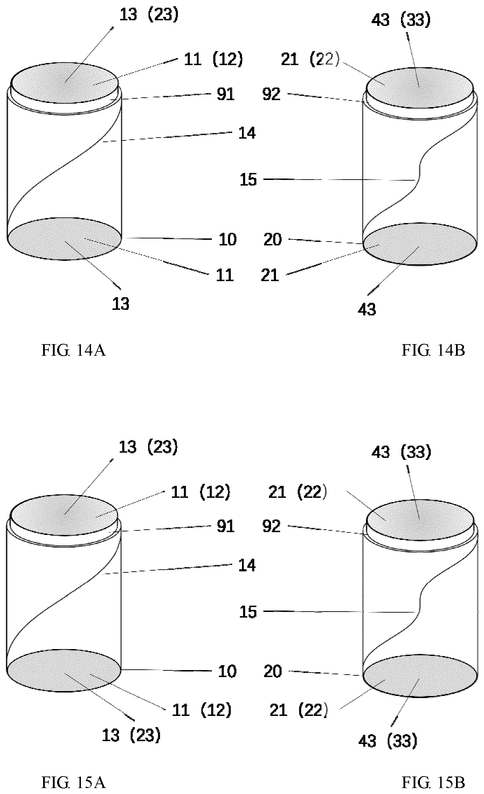

S4, a transmittance distribution of an output end of the bicubic function type image inverter is tested by using a transmittance tester (i.e., an apparatus for detecting visible light transmittance and uniformity of an optical fiber image transmission element involved in Patent Application No. CN 111442908A). Then after analyzing obtained data, obtained non-uniform transmittance is 4.13%, and central transmittance is 45%. A gradual-change metallic chromium film with a center thickness of 6nm and an edge thickness of 1nm is then made through coating by using a rotary coating apparatus, the non-uniform transmittance is reduced to 0.98%, the central transmittance is 41.08%, and test results are shown in FIG 14.

Specifically, the assembled mechanical rotary coating apparatus is put into a cavity of a magnetron sputtering coating machine. A click power supply is turned on, and a rotation speed of the mechanical rotary coating apparatus is adjusted to 10rpm. The cavity is closed, coating is started, and a distance between a mask and the fiber image inverter is 1mm.

The closing the cavity and starting coating specifically includes the following steps. a After closing the cavity of the coating device, a mechanical pump is first turned on for pre-vacuumizing. After a vacuum degree reaches 10Pa, the mechanical pump is turned off, a solenoid valve is opened, and a molecular pump is turned on. b When the vacuum degree reaches 2×10⁻⁴, a gas flow meter is turned on, a gas flow of argon is adjusted to 25sccm, and then a pressure in the cavity is adjusted to 0.8Pa through a G valve. c A sputtering power switch is turned on. Pre-sputtering is started by adjusting power to 50W. A baffle valve is opened after pre-sputtering for 5 minutes. Formal sputtering is started by adjusting the power to 60W. Formal sputtering time is 50s. d After the sputtering is completed, the baffle valve is closed, the power switch is turned off, a knob of the gas flow meter is turned to 0, the solenoid valve is closed, the molecular pump is turned off, and a valve connecting the air is opened to balance internal and external atmospheric pressures of the cavity. e The cavity of the coating device is opened, the rotary coating apparatus is taken out, coating ends, and the image inverter with high-uniformity and high-transmittance is obtained. The fiber image inverter may be used in an electric low-light-level night vision device.

As may be seen from FIG. 14, vignetting defects of the bicubic function type image inverter are lower than those of the biquadratic function type image inverter before coating, indicating that a structure of the bicubic function type image inverter is optimal. After coating the chromium film, the central transmittance of the image inverter is reduced from 45% to 41.08%, the vignetting defects are reduced from 4.13% to 0.98%, and the phenomenon of reducing the vignetting defects is more obvious.

### Embodiment 3:

the embodiment provides a bicubic function type image inverter, and its fabrication specifically includes the following steps.

S1, an implementation is the same as in Embodiment 2.

S2, an implementation is the same as in Embodiment 2.

S3, an implementation is the same as in Embodiment 2.

S4, compared with Embodiment 2, the embodiment differs from Embodiment 2 in that a gradual-change titanium nitride film with a center thickness of 30 nm and an edge thickness of 5nm is made through coating by using a rotary coating apparatus. Test results show that non-uniform transmittance is reduced to 1.08%, and central transmittance is 40.98%. The test results are shown in FIG 15.

Specifically, the assembled mechanical rotary coating apparatus is put into a cavity of a magnetron sputtering coating machine. A click power supply is turned on, and a rotation speed of the mechanical rotary coating apparatus is adjusted to 10rpm. The cavity is closed, coating is started, and a distance between a mask and the image inverter is 1mm.

The closing the cavity and starting coating specifically includes the following steps. a After closing the cavity of the coating device, a mechanical pump is first turned on for pre-vacuumizing. After a vacuum degree reaches 10Pa, the mechanical pump is turned off, a solenoid valve is opened, and a molecular pump is turned on. b When the vacuum degree reaches 2×10⁻⁴, a gas flow meter is turned on, a gas flow of argon is adjusted to 25sccm, and then a pressure in the cavity is adjusted to 0.8Pa through a G valve. c A sputtering power switch is turned on. Pre-sputtering is started by adjusting power to 50W. A baffle valve is opened after pre-sputtering for 5 minutes. Formal sputtering is started by adjusting the power to 60W. Formal sputtering time is 230s. d After the sputtering is completed, the baffle valve is closed, the power switch is turned off, a knob of the gas flow meter is turned to 0, the solenoid valve is closed, the molecular pump is turned off, and a valve connecting the air is opened to balance internal and external atmospheric pressures of the cavity. e The cavity of the coating device is opened, the rotary coating apparatus is taken out, coating ends, and the image inverter with high-uniformity and high-transmittance is obtained. The fiber image inverter may be used in a low-light-level night vision device.

As may be seen from FIG 15, by changing a coating material from the chromium film to the titanium nitride film, the central transmittance of the image inverter is reduced from 45% to 40.98%, and the vignetting defects are reduced from 4.13% to 1.08%, indicating that the purpose of homogenization may also be achieved by changing the coating material.

### Comparative example 1:

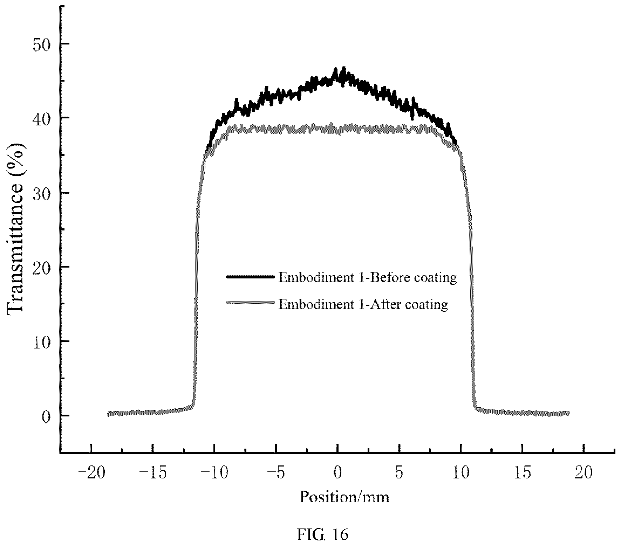

Compared with Embodiment 2, the comparative example differs from Embodiment 2 in that a conventional method (no rotary coating apparatus or mask, and other operation steps and parameters are the same as those in Embodiment 3) is used for coating an output end of a bicubic function type image inverter with a metallic chromium film with thicknesses of 5nm at both edge and central regions. After testing, it is found that non-uniform transmittance is reduced to 5.19%, and central transmittance is 36%. The test results are shown in FIG 16. As may be seen from FIG. 16, vignetting defects cannot be effectively reduced using this conventional method.

The non-uniform transmittance and central transmittance of the fiber image inverters in Embodiment 1 to Embodiment 3 and Comparative example 1 before and after coating are tested, and test results are shown in Table 1. A test principle is as follows: a beam of collimated incident light with a wavelength of 550nm is illuminated to the input end of the fiber image inverter, the light from the output end of the fiber image inverter is received through a CCD camera, a light intensity distribution map is obtained, and relative transmittance is calculated by luminous fluxes of the input and output light. A luminous flux is equal to a light intensity multiplied by an area, and the light intensity is measured by a transmittance tester. Central transmittance is the transmittance at a position of 0 (an exact center of the fiber image inverter). Non-uniform transmittance is a difference between the central transmittance and transmittance at an edge of an effective area.

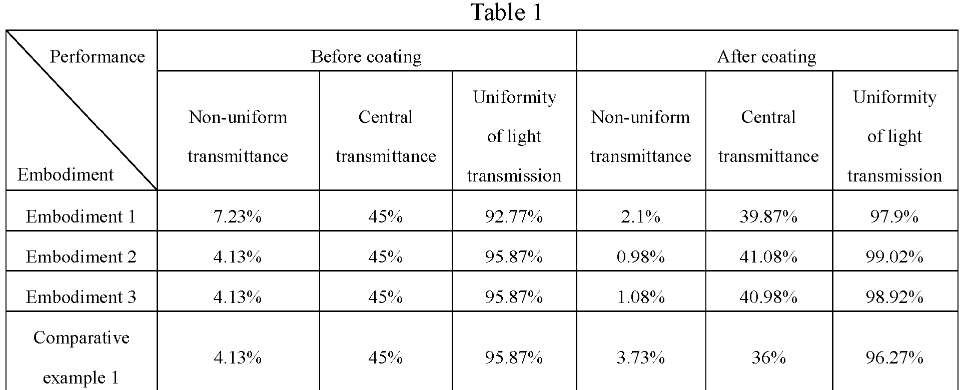

From the data in Table 1, it may be concluded that before coating, when the central transmittance of Embodiment 1 to Embodiment 3 is maintained at 45%, the non-uniform transmittance of the bicubic function type image inverter is 4.13%, the uniformity of transmittance is 95.87%, and the structure is optimal. The non-uniform transmittance of the biquadratic function type image inverter is 7.23%, the uniformity of transmittance is 92.77%, and the structure is the worst. After coating, when it is ensured that average non-uniform transmittance is about 1%, the central transmittance of the bicubic function type image inverter may reach 41.08%, while the central transmittance of the biquadratic function type image inverter is only 39.87%, which also indicates that the structure of the bicubic function type image inverter is optimal.

In the specification of the present application, a large number of specific details are stated. However, it can be understood that the embodiments of the present application may be practiced without these specific details. In some embodiments, well-known methods, structures and techniques are not shown in detail so as not to obscure the understanding of the specification.

In addition, it needs to be noted that the specific technical features described in the above specific implementations may be combined in any suitable way without contradiction. In order to avoid unnecessary repetition, various possible combination modes will not be described separately in the present application.

In addition, various different implementations of the present application may also be combined arbitrarily. As long as they do not violate the idea of the present application, they should also be regarded as the contents disclosed in the present application.

The above is only better embodiments of the present application, and does not make any formal restriction on the present application, and any simple changes, equivalent changes and modifications made to the above embodiments based on the technical substance of the present application are still within the scope of the technical scheme of the present application.

## Claims

1. **A fiber** image inverter with high-uniformity and high-transmittance, comprising an input end portion, an output end portion, and an optical fiber portion arranged between the input end portion and the output end portion; wherein a surface of the input end portion and/or the output end portion has a film whose thickness gradually decreases from a center to an edge; and the thickness and position of the film satisfy: x=-2×10⁻⁷y⁶-8×10⁻⁹y⁵-1×10⁻⁴y⁴-2×10⁻⁶y³-0.0315y²-1×10⁻¹¹y+4.2165, wherein x is the absolute thickness of the film, and y is a distance from the center to the edge.

2. The fiber image inverter with the high-uniformity and the high-transmittance according to claim 1, wherein a value of x is greater than 0, and a value of y is in a range from 0 to 11.5.

3. The fiber image inverter with the high-uniformity and the high-transmittance according to claim 1, wherein the fiber image inverter is a biquadratic function type image inverter or a bicubic function type image inverter.

4. The fiber image inverter with the high-uniformity and the high-transmittance according to claim 1, wherein the film comprises a homogenizing film layer and/or an anti-reflection film layer, and a center of the film is provided with a film layer center.

5. A method for preparing a fiber image inverter with high-uniformity and high-transmittance, comprising the following steps:
preparing a torsional structure of the image inverter; and
preparing a homogenizing film on a surface of the image inverter.

6. The method for preparing a fiber image inverter with the high-uniformity and the high-transmittance according to claim 5, wherein preparing the torsional structure of the image inverter comprises the following step:
preparing a biquadratic function type image inverter or a bicubic function type image inverter respectively according to an optical fiber track in a torsional region of the image inverter.

7. The method for preparing a fiber image inverter with the high-uniformity and the high-transmittance according to claim 5, wherein preparing the homogenizing film on the surface of the fiber image inverter comprises the following step:
coating the surface of the fiber image inverter with the film whose thickness gradually decreases from a center to an edge.

8. The method for preparing a fiber image inverter with the high-uniformity and the high-transmittance according to claim 7, wherein the film comprises a homogenizing film layer and/or an anti-reflection film layer, and a center of the film is provided with a film layer center.

9. The method for preparing a fiber image inverter with the high-uniformity and the high-transmittance according to claim 5, wherein a rotation speed for coating the film whose thickness gradually decreases from a center to an edge is in a range from 10rpm to 20rpm.

10. The method for preparing a fiber image inverter with the high-uniformity and the high-transmittance according to claim 5, wherein a pressure for coating the film whose thickness gradually decreases from a center to an edge is in a range from 1.0Pa to 2.0Pa.

11. The method for preparing a fiber image inverter with the high-uniformity and the high-transmittance according to claim 5, wherein a vacuum degree for coating the film whose thickness gradually decreases from a center to an edge is less than or equal to 3×10⁻⁴.

12. The method for preparing a fiber image inverter with the high-uniformity and the high-transmittance according to claim 5, wherein a gas flow of argon is in a range from 15sccm to 30sccm during coating the film whose thickness gradually decreases from a center to an edge.

13. The method for preparing a fiber image inverter with the high-uniformity and the high-transmittance according to claim 5, wherein coating the film whose thickness gradually decreases from a center to an edge is achieved by sputtering; and pre-sputtering is started with power ranging from 30W to 50W, formal sputtering is started by adjusting the power to a range from 60W to 80W after pre-sputtering ranging from 3 minutes to 5 minutes, and formal sputtering time is in a range from 0.5 minute to 3 minutes.

14. A low-light-level night vision device, comprising the fiber image inverter with the high-uniformity and the high-transmittance according to any one of claims 1-4.
